# DEMANDE DE BREVET EUROPEEN

(11) **EP 1 790 225 A1**
(43) Date de publication de la demande: **30.05.2007**
(21) Numéro de dépôt: 06291537.6
(22) Date de dépôt: 02.10.2006
(51) Int. Cl.: A01N 31/16, A01P 21/00

(54) **Procédé antigerminatif de tubercules ou de bulbes utilisant l'eugenol et/ou l'isoeugenol**

(30) Priorité: 04.10.2005 FR 0510140
(71) Demandeur: XEDA INTERNATIONAL, 13670 Saint-Andiol (FR)
(72) Inventeur: Sardo, Alberto, 13160 Chateaurenard (FR)
(74) Mandataire: Domenego, Bertrand

(57) **Abrégé**

La présente invention concerne un procédé anti-germinatif de bulbes et tubercules comprenant l'application auxdits bulbes ou tubercules d'une composition traitante à base d'un principe actif choisi parmi l'eugénol, un sel de l'eugénol acceptable sur le plan alimentaire, l'isoeugénol, un sel de l'isoeugénol acceptable sur le plan alimentaire et leurs mélanges ou l'huile de girofle, ledit procédé comprenant l'application par aspersion, atomisation ou immersion à température ambiante de ladite composition, sur les bulbes et tubercules après stockage.

## Description

L'invention concerne un procédé antigerminatif de tubercules et de bulbes, par application auxdits tubercules et bulbes d'une composition traitante à base d'eugénol ou d'isoeugénol.

Ce procédé est notamment approprié au traitement des bulbes d'oignons et des tubercules de pommes de terre.

Après la récolte des pommes de terre ou autres tubercules, celles-ci sont conservées à des températures de l'ordre de 20° à 30°C pendant environ dix jours afin de durcir leur couche épidermique ou « peau », puis progressivement refroidies jusqu'à leur température de conservation d'environ 10°C, généralement entre 7° et 10°C.

Au cours du premier mois, voire des deux à trois premières semaines après leur récolte, les tubercules restent à l'état de repos et présentent peu de tendance à la germination.

Cependant, avant la fin de cette période, les tubercules doivent être traités chimiquement afin d'inhiber la germination qui serait responsable d'effets néfastes, tels qu'une perte de poids frais, une conservation de l'amidon en sucre, une diminution de la qualité de tubercules ainsi qu'une détérioration de leur apparence.

En outre, les germes ainsi que les tissus avoisinants contiennent des taux élevés de glycoalcaloïdes toxiques qui ne sont pas détruits au cours de la cuisson.

Il est essentiel de retarder la germination, celle-ci ayant des conséquences néfastes telles que la perte de poids frais, la conversion de l'amidon en sucre, la diminution de la qualité des tubercules et des bulbes et la détérioration de leur apparence.

Des souches bactériennes attaquant les tubercules sont par exemple *Fusarium, Helminthosporium, Phoma, tel que Phoma exiga.*

Un premier traitement antigerme est réalisé normalement dans les 15 jours suivant la récolte, 30 jours au plus tard.

Les procédés de traitement antigerminatif les plus utilisés mettent en oeuvre des agents chimiques tels que le chloropropham (CIPC, -méthyléthyl-3-chlorophénylcarbamate). Ces agents chimiques présentent des risques de toxicité élevés pour le consommateur, de sorte que les doses homologuées sont constamment réduites.

Lors de la sortie des tubercules de la chambre froide, il est normal qu'un démarrage de la germination ait lieu à cause de la baisse des résidus du produit antigerme pendant la conservation et surtout l'exposition des tubercules à une température plus élevée. Il serait dangereux de traiter à ce moment les pommes de terre avec une formulation de CIPC car cela ferait augmenter le niveau des résidus qui, même dans la limite autorisée par la législation, constituerait un danger pour les consommateurs.

Il est donc important de mettre à disposition un produit suffisamment fort pour détruire les germes déjà formés, tout en étant moins toxique que le CIPC.

Récemment, l'utilisation de terpènes a été proposée dans le traitement antigerminatif des tubercules et des bulbes : l'avantage de ces terpènes est leur absence de toxicité. Ainsi, la demande WO 00/32054 concerne un procédé de traitement antigerminatif consistant à appliquer sur les tubercules une composition d'eugénol ou d'isoeugénol à chaud. Deux techniques d'application sont envisagées :
- application de la température de 40° à 60°C par immersion ou douchage ;
- application de la composition à base d'eugénol par thermonébulisation, la température du brouillard à la sortie de l'appareil étant comprise entre 110° et 300°C.

La teneur en principes actifs de la composition est comprise de 80 % à 100 % ou de 15 % à 80 %, de préférence de 25 à 60 % ; préférentiellement en combinaison avec un tensioactif et/ou un agent réduisant l'évaporation.

Néanmoins, les procédés décrits dans cette demande nécessitent le chauffage de la composition et peuvent donc être difficiles à mettre en oeuvre.

Par ailleurs, la composition est essentiellement utilisée à des fins préventives, avant l'apparition des germes et/ou le stockage. L'action de l'eugénol sur les germes déjà formés n'a pas été mise en évidence.

Or, il a maintenant été démontré que l'eugénol en solution liquide émulsifiable appliquée en ligne sur des pommes de terre lavées ou par immersion des pommes de terre dans une solution aqueuse diluée, après stockage des pommes de terre, à température ambiante, avait pour effet d'empêcher la germination et de brûler les germes naissant de manière bien plus efficace que la formulation à base de CIPC ou autres huiles essentielles appliquées de manière similaire.

La présente demande concerne donc un procédé antigerminatif après stockage de bulbes ou tubercules à base d'eugénol, d'isoeugénol ou d'un de ses sels, de réalisation plus aisée.

Selon un premier objet, la présente demande concerne un procédé de traitement antigerminatif de bulbes ou tubercules comprenant l'application auxdits bulbes ou tubercules d'une composition traitante à base d'eugénol, d'isoeugénol ou un de leurs sels acceptables sur le plan alimentaire et leurs mélanges, ou l'huile de girofle, ledit procédé comprenant l'application par aspersion, atomisation ou immersion de ladite composition à température ambiante sur les bulbes et les tubercules après stockage.

Le stockage des tubercules a lieu à froid comme il est d'usage, notamment à une température d'environ 10°C, de préférence entre 7 et 10°C. La période de stockage dure généralement plusieurs mois, de préférence de 5 à 7 mois.

Le traitement des bulbes et tubercules est mis en oeuvre après leur période de conservation, avant la mise sur le marché, de préférence après leur nettoyage. Ce traitement après stockage, à la sortie des chambres froides, est particulièrement avantageux.

Selon un premier aspect, le principe actif est l'huile de girofle.

Selon un second aspect, le principe actif est l'eugénol.

Selon un autre aspect, le principe actif est un sel de l'eugénol ou de l'isoeugénol acceptable sur le plan alimentaire. Les sels acceptables sur le plan alimentaire peuvent être notamment les sels de métaux alcalins tels que les sels de sodium, les sels de lithium ou les sels de potassium. Un tel traitement par une composition à base d'un sel de l'eugénol ou de l'isoeugénol acceptable sur le plan alimentaire est tout particulièrement avantageux. En effet, l'utilisation d'une composition partiellement ou complètement salifiée permet de s'affranchir en tout ou partie de l'odeur forte et désagréable de l'eugénol et de l'isoeugénol.

Selon un autre aspect préféré, ladite composition contient de l'huile de girofle complètement ou partiellement salifiée. Dans ce cas, un sel acceptable sur le plan alimentaire (par exemple sel de sodium, sel de lithium, sel de potassium) est introduit dans la composition, lors de sa préparation, sous forme de sel ou bien sous forme neutre ; dans cette dernière hypothèse, le sel est formé *in situ* par addition d'une base appropriée telle qu'un hydroxyde de métal alcalin (par exemple soude ou potasse). De préférence, le degré de salification de l'huile de girofle partiellement salifiée est supérieur ou égal à 40%, 50%, 75%, 90% ou 99%.

Selon un autre aspect, la composition traitante peut être appliquée en continu ou de façon répétée dans le temps.

Selon un autre aspect préférentiel, ladite composition comprend, avant dilution éventuelle, de 15 % à 40 % de principe actif; plus préférentiellement, environ 25 % de principe actif, par exemple d'huile de girofle.

Selon un autre aspect préféré, ladite composition comprend, avant dilution éventuelle, de 60 % à 85 % d'émulsifiants, plus préférentiellement environ 75 % d'émulsifiants.

Selon un aspect particulier, lesdits émulsifiants comprennent des produits de condensation d'acides et/ou alcools gras ; plus préférentiellement, les émulsifiants sont choisis parmi l'alcool laurique éthoxylé, l'acide oléique éthoxylé et/ou leurs mélanges. La lécithine ayant un effet phytoprotecteur, on préfère les émulsifiants ne contenant pas de lécithines.

Selon un autre objet, la présente invention concerne également une composition comprenant 15% à 40 % d'eugénol, d'isoeugénol ou un de leurs sels acceptables sur le plan alimentaire, ou leurs mélanges, ou l'huile de girofle, et 60 % à 85 % d'émulsifiants.

Préférentiellement, ladite composition comprend environ 25 % d'huile de girofle et 70 % à 80% d'émulsifiants, plus préférentiellement environ 75 % d'émulsifiants.

Selon un aspect particulier de l'invention, lesdits émulsifiants sont composés de 10 à 40 % de produits de condensation à partir d'alcool laurique et de 50 % à 90 % de produits de condensation à partir de l'acide oléique et/ou leurs mélanges.

Selon un aspect plus particulier, lesdits émulsifiants sont composés de 10 % à 40 % d'alcool laurique éthoxylé 11 mol et 50 % à 90 % d'acide oléique éthoxylé 6 mol et d'acide oléique éthoxylé 10 mol et/ou leurs mélanges.

Selon un aspect encore plus particulier, la composition, comprenant un ou plusieurs émulsifiants comme décrit ci-dessus, contient de l'eugénol et/ou de l'isoeugénol et/ou de l'huile de girofle comme composé antigerminatif.

Les compositions à base de sel ou salifiées selon l'invention permettent d'éviter l'utilisation de tensioactifs.

Une composition d'huile de girofle partiellement salifiée est tout particulièrement avantageuse. De préférence, le degré de salification d'une huile de girofle « partiellement salifiée » est supérieur ou égal à 40%, supérieur ou égal à 50%, supérieur ou égal à 75%, supérieur ou égal à 90% ou supérieur ou égal à 99%.

Par exemple, on prépare une telle composition par mélange dans l'eau de 26% d'huile de girofle et de 2,25% de base, par exemple de KOH. Selon un autre objet, la présente invention concerne l'utilisation de ladite composition pour l'aspersion, atomisation ou immersion sur des bulbes et/ou tubercules à température ambiante à des fins antigerminatives.

Le terme « antigerminatif » désigne ici le traitement préventif empêchant la formation des germes et le traitement détruisant effectivement les germes déjà formés. La destruction des germes déjà formés est un aspect préféré de la présente invention.

Selon un aspect préféré de l'invention, la composition est utilisée sur des bulbes et/ou tubercules, par exemple pommes de terre, après stockage, comme défini précédemment.

La composition traitante peut être appliquée sur les bulbes et tubercules en utilisant l'une quelconque des méthodes connues dans la technique, par aspersion ou atomisation. La teneur particulière des compositions selon l'invention permet d'éviter le chauffage de la composition qui peut être néfaste lorsqu'elle est appliquée chaude sur les bulbes et tubercules. La composition permet donc également d'éviter l'étape ultérieure de refroidissement qui peut être nécessaire.

Par ailleurs, la teneur particulière des compositions selon l'invention rend la composition traitante particulièrement bien dispersable dans l'eau. Ceci est tout particulièrement avantageux lorsque la composition est appliquée après le lavage des bulbes et tubercules. Ainsi, la composition traitante se disperse dans la pellicule d'eau enrobant les bulbes et tubercules après lavage. Il s'ensuit ainsi une couverture homogène, et donc une bonne pénétration dans le bulbe ou le tubercule.

Les compositions salifiées ou partiellement salifiées selon l'invention permettent par ailleurs d'éviter l'utilisation de tensioactifs.

Les compositions selon l'invention peuvent être utilisées pures ou en dispersion dans l'eau. Les compositions selon l'invention se réfèrent également aux compositions diluées dans l'eau. Généralement, les compositions diluées sont à concentration comprise entre 2 et 50 %, préférentiellement entre 5 et 10 %.

En général, la quantité d'eau est ajustée de façon à ce que la teneur finale en principe actif de la composition traitante soit comprise entre 500 et 30 000 ppm en poids, mieux encore entre 1000 et 20 000 ppm en poids.

La composition traitante est préparée de façon conventionnelle en soi par simple mélange de ses constituants.

Lorsque la composition traitante comprend un sel acceptable sur le plan alimentaire, celui-ci peut être introduit dans la composition, lors de sa préparation, sous forme de sel ou bien sous forme neutre ; dans cette dernière hypothèse, le sel est formé *in situ* par addition d'une base appropriée telle qu'un hydroxyde de métal alcalin (soude ou potasse).

En général, on applique 200 g de composition par tonne de tubercule ou bulbe traitée.

Plus généralement, on ajuste la quantité appliquée de composition en fonction de la durée de stockage et/ou de la durée entre la sortie du stockage en chambre froide et la mise sur le marché. L'eugénol et l'isoeugénol étant des produits odorants, il est préférable qu'à leur mise sur le marché la quasi-totalité du principe actif se soit évaporée afin de ne pas altérer la valeur commerciale des bulbes et tubercules. La quantité de principe actif devant être appliquée dépend donc de la nature et de la volatilité du principe actif utilisé. L'eugénol et l'isoeugénol sous forme de sel acceptable sur le plan alimentaire ou l'huile de girofle complètement ou partiellement salifiée sont particulièrement avantageux en raison de leur moindre odeur.

Les exemples suivants illustrent plus avant l'invention.

### Exemple 1

La formulation suivante a été utilisée pour l'immersion de pommes de terre :
- 25 % d'huile de girofle, et
- 75 % d'émulsifiants constitués de :
   - 47 % d'acide oléique éthoxylé 6 mol ;
   - 9 % d'acide oléique éthoxylé 10 mol ;
   - 19 % d'alcool laurique éthoxylé 11 mol.

### Exemple 2

La formulation suivante a été utilisée pour l'immersion de pommes de terre :
- 20 % d'eugénol ;
- 80 % d'émulsifiants constitués de :
   - 50 % d'acide oléique éthoxylé 6 mol ;
   - 10 % d'acide oléique éthoxylé 10 mol ;
   - 20 % d'alcool laurique éthoxylé 11 mol.

### Exemple 3

Des pommes de terre de variétés Russet Burbank et Russet Norkotah sont lavées, stockées en chambre froide pendant environ six mois puis sorties. Les tubercules présentant des germes visibles à l'oeil nu ont été retenus.

Les formulations des exemples 1 et 2 ont été diluées dans l'eau à la concentration de 5 % (exemple 1) ou 4 % (exemple 2) et les pommes de terre immergées ensuite dans la solution pendant 5 secondes, puis laissées sécher à température ambiante.

Les résultats obtenus sont les suivants :
Les mesures ont été effectuées 24 heures et 48 heures après le traitement, basées sur l'échelle suivante :
1 : aucun effet sur les germes
2 : destruction de 25 % des germes sur les tubercules
3 : destruction de 50 % des germes sur les tubercules
4 : destruction de 75 % des germes sur les tubercules
5 : destruction de 100 % des germes sur les tubercules.
Les résultats sont les suivants :
i) Russet Burbank

| | 24 heures | 48 heures |
|---|---|---|
| Contrôle | 1.0 | 1.0 |
| Composition 1 | 4.8 | 5.0 |
| Composition 2 | 4.8 | 5.0 |

ii) Russet Norkotah

| | 24 heures | 48 heures |
|---|---|---|
| Contrôle | 1.0 | 1.0 |
| Composition 1 | 5.0 | 5.0 |
| Composition 2 | 5.0 | 5.0 |

## Revendications

1. - Procédé anti-germinatif de bulbes et tubercules comprenant l'application auxdits bulbes ou tubercules d'une composition traitante à base d'un principe actif choisi parmi l'eugénol, un sel de l'eugénol acceptable sur le plan alimentaire, l'isoeugénol, un sel de l'isoeugénol acceptable sur le plan alimentaire et leurs mélanges ou l'huile de girofle, ledit procédé comprenant l'application par aspersion, atomisation ou immersion à température ambiante de ladite composition, sur les bulbes et tubercules après stockage.

2. - Procédé de traitement selon la revendication 1, **caractérisé en ce qu'**il comprend l'étape consistant à soumettre lesdits bulbes et tubercules à un traitement par aspersion ou atomisation avec ladite composition traitante ou par immersion dans ladite composition traitante, et ceci après stockage des bulbes et tubercules.

3. - Procédé de traitement selon la revendication 1 ou 2, **caractérisé en ce que** le principe actif est l'huile de girofle.

4. - Procédé de traitement selon la revendication 3, **caractérisé en ce que** l'huile de girofle est complètement ou partiellement salifiée.

5. - Procédé de traitement selon la revendication 1 ou 2, **caractérisé en ce que** le principe actif est l'eugénol, un sel de l'eugénol acceptable sur le plan alimentaire, et leurs mélanges.

6. - Procédé de traitement selon l'une quelconque des revendications précédentes, **caractérisé en ce que** la composition traitante est appliquée en continu ou de façon répétée auxdits bulbes et tubercules.

7. - Procédé de traitement selon l'une quelconque des revendications précédentes, **caractérisé en ce que** ladite composition avant dilution éventuelle comprend de 15 à 40 % de principe actif.

8. - Procédé selon la revendication 7, **caractérisé en ce que** la composition comprend avant dilution éventuelle 25 % d'huile de girofle.

9. - Procédé selon l'une quelconque des revendications précédentes, **caractérisé en ce que** ladite composition comprend avant dilution éventuelle 60 à 85 % d'émulsifiants.

10. - Procédé selon l'une quelconque des revendications précédentes, **caractérisé en ce que** ladite composition comprend avant dilution éventuelle 75 % d'émulsifiants.

11. - Procédé selon l'une quelconque des revendications 9 ou 10, **caractérisé en ce que** lesdits émulsifiants comprennent des produits de condensation avec les alcools et/ou acides gras.

12. - Procédé selon la revendication 11, **caractérisé en ce que** lesdits émulsifiants comprennent l'alcool laurique éthoxylé, l'acide oléique éthoxylé et/ou leurs mélanges.

13. - Procédé selon l'une quelconque des revendications précédentes, **caractérisé en ce que** les tubercules sont des tubercules de pomme de terre.

14. - Composition comprenant :
- 15 à 40 % d'eugénol, un sel de l'eugénol acceptable sur le plan alimentaire, l'isoeugénol, un sel de l'isoeugénol acceptable sur le plan alimentaire et leurs mélanges ou l'huile de girofle,
- 60 à 85 % d'émulsifiants.

15. - Composition selon la revendication 14, **caractérisée en ce qu'**elle comprend 25 % d'huile de girofle.

16. - Composition selon la revendication 14 ou 15, **caractérisée en ce qu'**elle comprend 70 à 80 % d'émulsifiants.

17. - Composition selon la revendication 14, 15 ou 16, **caractérisée en ce qu'**elle comprend 75 % d'émulsifiants.

18. - Composition selon l'une quelconque des revendications 14 à 17, **caractérisée en ce que** lesdits émulsifiants comprennent des produits de condensation à partir des alcools et/ou acides gras.

19. - Composition selon la revendication 18, **caractérisée en ce que** lesdits émulsifiants comprennent l'alcool laurique éthoxylé, l'acide oléique éthoxylé et/ou leurs mélanges.

20. - Composition selon la revendication 19 telle que lesdits émulsifiants sont choisis parmi l'alcool laurique éthoxylé 11 mol, l'acide oléique éthoxylé 6 mol et l'acide oléique éthoxylé 10 mol et/ou leurs mélanges.

21. - Composition selon l'une quelconque des revendications 14 à 20 telle que lesdits émulsifiants sont composés de :
- 10 à 40 % de produits de condensation à partir d'alcool laurique, et
- 50 à 90 % de produits de condensation à partir de l'acide oléique et l'acide oléique et/ou leurs mélanges.

22. - Composition selon l'une quelconque des revendications 14 à 21 telle que lesdits émulsifiants sont composés de :
- 10 à 40 % d'alcool laurique éthoxylé 11 mol, et
- 50 à 90 % d'acide oléique éthoxylé 6 mol et d'acide oléique éthoxylé 10 mol et/ou leurs mélanges.

23. - Composition diluée d'une composition selon l'une quelconque des revendications 14 à 22 à hauteur de 2 % à 50 %.

24. - Utilisation d'une composition selon la revendication 23 pour l'aspersion, l'atomisation ou l'immersion sur des bulbes et/ou tubercules à température ambiante à des fins antigerminatives.
